# EUROPEAN PATENT APPLICATION

(11) **EP 1 883 195 A1**
(43) Date of publication of application: **30.01.2008**
(21) Application number: 06015819.3
(22) Date of filing: 28.07.2006
(51) Int. Cl.: H04L 29/06

(54) **Tunnel switching mechanism inside a SGSN for OTA (one tunnel approach) - TTA (Two tunnel approach) switching used for legal interception**

(71) Applicant: Nokia Siemens Networks GmbH & Co. KG, 81541 München (DE)
(72) Inventor: Neubauer, Gerhard, 3373 Kemmelbach (AT)

(57) **Abstract**

The invention concerns devices and a method for establishing a connection in a cellular mobile telecommunication network between a Gateway GPRS support node (GGSN) and a Radio Network Controller (RNC) via a Serving GPRS Support Node (SGSN), wherein during establishment of the connection a Serving GPRS Support Node (SGSN) decides, whether for the connection one tunnel (OTA) will be established between the Gateway GPRS support node (GGSN) and the Radio Network Controller (RNC) or whether for the connection two tunnels (TTA) will be established between the Gateway GPRS support node (GGSN) and the RNC,
and wherein depending on the decision one tunnel (OTA) or two tunnels (TTA) will be established for the connection between the Gateway GPRS support node (GGSN) and the Radio Network Controller (RNC).

## Description

The invention concerns devices and method for establishing/modifying a connection in a cellular mobile telecommunication network.

OTA (one tunnel approach/ one tunnel) connections and TTA (two tunnel approach/ two tunnel) connections for e.g. "Userplane" PDP contexts in cellular mobile telecommunication networks are e.g. known from 3GPP23.873 (available e.g. at www.etsi.org).

Currently (up to PS 6.0 3GPP rel.6) the "userplane" is established between GGSN and RNC via a SGSN. With the so called OTA approach (see also 3GPP 23.873) it is suggested to remove the SGSN from the userplane path, which means that the userplane will be established between the GGSN and the RNC without involving the SGSN. Within this approach it is necessary to migrate interception, Camel and paging functions from the SGSN into the GGSN, which for the approach according to the invention is not necessary.

It is an object of the invention to provide an efficient connection establishment/modification mechanism for a cellular mobile telecommunication network. The object is respectively achieved by the invention defined in the patent claims.

The invention improves the "One Tunnel Approach" within a packet switched (PS) core network and provides a switch mechanism within the SGSN between OTA and TTA (and therefore no changes within RNC and GGSN are necessary to support OTA).

With introduction of an "OTA-TTA logic" within the SGSN, which is able to switch between "OTA" ("One Tunnel Approach") and "TTA" ("Two Tunnel Approach") it is possible to introduce the OTA into the PS Core network more smoothly and it is not necessary to migrate e.g. interception, Camel and paging function from a SGSN towards a GGSN.

It is suggested that an "OTA_TTA logic" according to the invention provides the following functions:
-) During establishment of a PDP Context the SGSN decides (based on stored information within the SGSN) if one tunnel will be established or two tunnels will be established, depending on the following information:
   *) A Subscriber has to be intercepted
   *) A Subscriber is a "Camel" subscriber,
   which means accounting collection function has to be located on an SGSN.
-)If during establishment of a PDP Context the "OTA" will be established and afterwards a trigger in the SGSN arrives to start interception,
   the OTA will be switched to the TTA, therefore an interception function stays within the SGSN.
-) if OTA is established and the RNC triggers "Iu_release/Rab_Release",
   the "OTA" will be switched from "OTA" to the "TTA", therefore an existing paging mechanism can be reused, where the GGSN forwards the DL packet (received form the PDN) to the SGSN and a SGSN initiates the Paging procedure as described within 3GPP. After a radio bearer is established it is up to the SGSN if the "TTA" will be switched to OTA.
-) If a subscriber establishes a new radio connection (e.g. via Service Request (Type=Data)), it is up to the SGSN if the TTA will be switched to the OTA after the successful Service Request procedure.

Currently this feature does not seem to require changes inside 3GPP standard documents and it solves the problem with introduction in an other way than the way that is currently described within 3GPP.

Currently the invention does not seem to require changes in the 3GPP standard documents. An implantation according to the invention can solve the problems in an other way.

Further details and advantages of the invention are set forth in the claims and in the following non-limiting description of an example, wherein in the enclosed drawing:
Fig. 1 shows a MS-GGSN user plane with UTRAN in a cellular mobile telecommunication network.
Fig. 2 shows a one tunnel approach connection and a two tunnel approach connection.

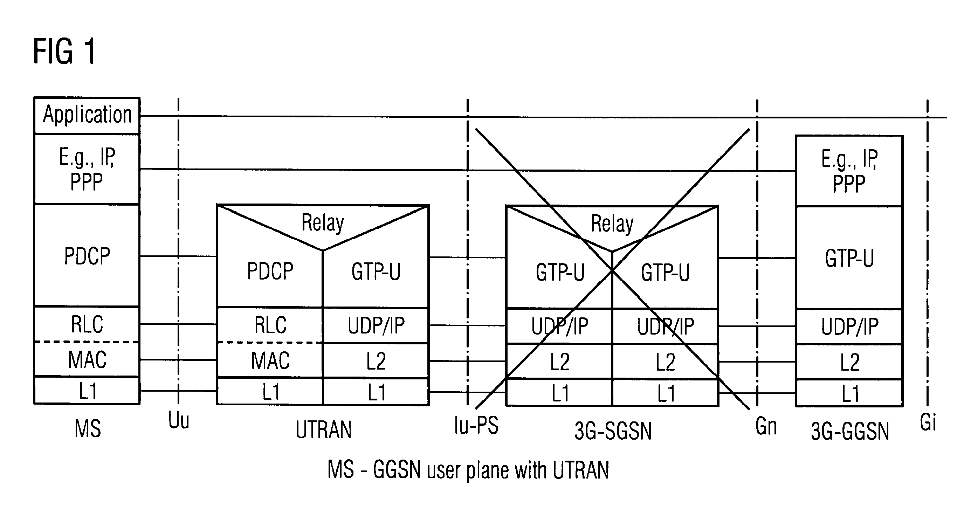

Fig. 1 schematically shows connections in several layers
- between a mobile station MS and a UTRAN via a Uu interface (L1/ Layer 1, RLC/MAC, PDCP),
- between a UTRAN and a 3G-SGSN (=Serving GPRS Support Node for e.g. a 3G cellular mobile network) via a Iu-PS interface (L1/ Layer 1, L2/Layer 2, UDP/IP, GTP/IP),
- between 3G-SGSN (=Serving GPRS Support Node) and a 3G-GGSN (=Gateway GPRS Support Node for e.g. a 3G cellular mobile network) via a Gn interface (L1/ Layer 1, L2/Layer 2, UDP/IP, GTP/IP),
- between a GGSN (=Gateway GPRS Support Node for e.g. a 3G cellular mobile network) and a (not shown) telecommunication network via a Gi interface,
- between an Application at an MS and the Gi interface, and
- between the IP/ PPP- layer of an MS and a GGSN (=Gateway GPRS Support Node for e.g. a 3G cellular mobile network).

In case of an established one tunnel connection (OTA) the relay function within the SGSN can be removed and a "connectionless" data path can be established between the RNC and GGSN directly. Therefore the remote endpoint for the RNC is not the SGSN but the GGSN and for the GGSN the remote endpoint is not the SGSN but the RNC. The endpoint is respectively indicated by an IP address and a TEID (tunnel endpoint ID) and the SGSN controls the remote endpoint advertisment.

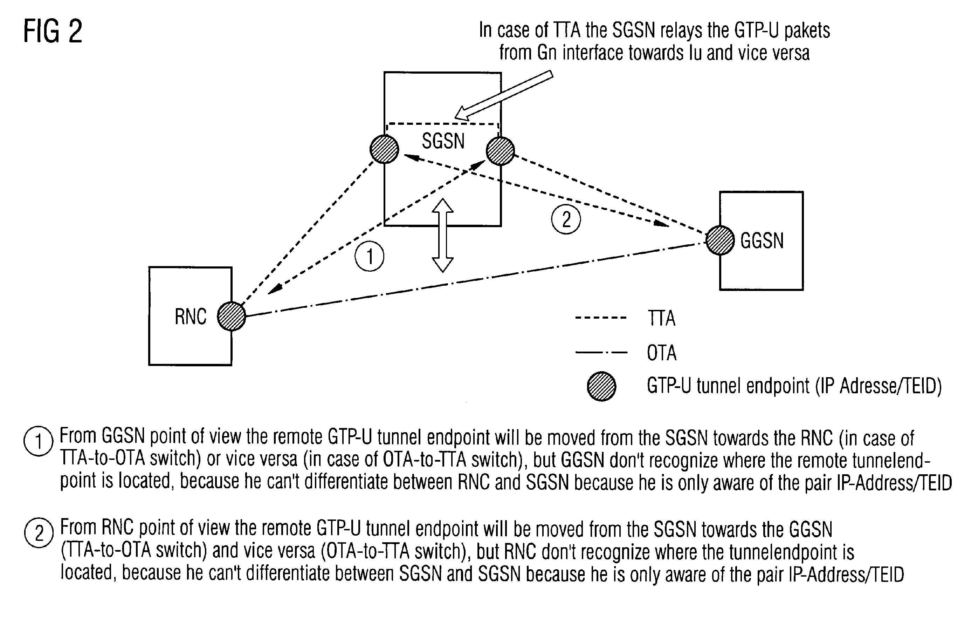

Fig. 2 shows a one tunnel connection (OTA) between a RNC and a GGSN and a two tunnel connection (TTA) between a RNC and a GGSN via a SGSN.

For establishing a connection in a cellular mobile telecommunication network between a Gateway GPRS support node GGSN and a Radio Network Controller RNC via a Serving GPRS Support Node SGSN, during establishment of the connection a Serving GPRS Support Node SGSN logic decides, whether for the connection one tunnel (OTA) will be established between the Gateway GPRS support node GGSN and the RNC or whether for the connection two tunnels (TTA) will be established between the Gateway GPRS support node GGSN and the RNC, and depending on the decision one tunnel (OTA) or two tunnels (TTA) will be established for the connection between the Gateway GPRS support node GGSN and the RNC.
If an OTA was established and an event occurs in the SGSN which makes it necessary to switch to the TTA, the SGSN performs this switch by sending an Update message to the GGSN and to the RNC (Note: This update message does not require new actions within RNC and GGSN because this Update messages has to be supported for other features also e.g. due to Inter SGSN RAU)

If a TTA was established and an event occurs in the SGSN which makes it necessary to switch to the OTA, the SGSN performs this switch by sending an Update message to the GGSN and to the RNC (Note: This update message does not require new actions within RNC and GGSN because this Update messages has to be supported for other features also e.g. due to Inter SGSN RAU)

Generally SGSN und GGSN can exchange (via GTP (3GPP29.060) messages) "remote tunnel parameters", i.e. the GGSN does not know whether it received "remote tunnel parameters" concerning an RNC or SGSN. Therefore the SGSN provides to the GGSN "remote tunnel parameters" concerning the SGSN or the RNC depending on whether OTA is possible (= if e.g. currently no interception, no camel,..) or not.

The SGSN controls which "remote tunnel parameters" are sent to the GGSN and the SGSN does the switching between OTA and TTA (or vice versa) and SGSN sends in the "Update_PDP_Context" (3GPP29.060) message the currently valid "remote tunnel parameters" (a pair of parameters, e.g. IP/TEID).

For doing this, the GGSN does not need a new function as it already supports IP/TEID address changes (e.g. in case of Inter SGSN RAU the new SGSN sends a Update PDP Context Request towards the GGSN to inform the GGSN that up to now he has to send the DL packets to the new IP Address/New TEID, ffs see 3GPP29.060).

Example for OTA-> TTA switch: After a PDP Context activation, with a "Create_PDP_Context_req" the GGSN is informed about "remote tunnel parameters" of RNC and all dl packets are sent now from the GGSN to the RNC (=OTA). If now interception is activated, the SGSN sends a "Update_PDP_Context" to the GGSN and herein tells the GGSN the "remote tunnel parameters" of the SGSN and after this the GGSN sends all DL packets to the SSGN and interception is executed by the SGSN.
SGSN now sends ide packets in DL to the RNC. The GGSN does not need to be able to perform interception. If SGSN gets the information that interception of the UE isn't needed any longer he can perform a switch from TTA->OTA via Update PDP Context Request towards the GGSN where the RNC IP Address and TEID are included

Between RNC and SGSN there is a IU interface (3GPP25.413). Here the SGSN informs the RNC about the RNC's communication partner and depending on whether OTA or TTA is currently used, the SGSN sends in
a "RAB_Assignment_Request" the "remote tunnel parameters" pair of the GGSN or of the SGSN to the RNC. If a switch OTA<-> TTA happens then the SGSN has also update the remote IP Address/TEID within the RNC with the RAB Assignment Request message in conjunction with the GGSN update described above.

## Claims

1. Method for establishing or modifying a connection in a cellular mobile telecommunication network between a Gateway GPRS Support Node (GGSN) and a Radio Network Controller (RNC),
wherein for establishment of the connection, a telecommunication network element (Serving GPRS Support Node SGSN) decides,
whether for the connection one tunnel (OTA) will be established between the Gateway GPRS support node (GGSN) and the Radio Network Controller (RNC) or
whether for the connection two tunnels (TTA) will be established between the Gateway GPRS Support Node (GGSN) and the Radio Network Controller (RNC) via a Serving GPRS Support Node (SGSN),
and wherein depending on the decision one tunnel (OTA) or two tunnels (TTA) will be established for the connection between the Gateway GPRS Support Node (GGSN) and the Radio Network Controller (RNC).

2. Method according to claim 1, **characterized in that**
the Serving GPRS Support Node (SGSN) decides based on information stored in a dataset within the Serving GPRS Support Node (SGSN).

3. Method according to any of the preceding claims, **characterized in that**
the connection is a "userplane" connection.

4. Method according to any of the preceding claims, **characterized in that**
the connection is a PDP context connection.

5. Method according to any of the preceding claims, **characterized in that**
the decision depends on whether a subscriber using the connection has to be legally intercepted.

6. Method according to any of the preceding claims, **characterized in that**
if after establishment of a one tunnel connection (OTA) a lawful interception of the connection is to be started, the one tunnel connection (OTA) is switched to a two tunnel connection (TTA).

7. Method according to claim 6, **characterized in that**
if during establishment of a PDP context connection a one tunnel connection (OTA) is established and if afterwards a trigger, starting interception of the connection, arrives at the Serving GPRS Support Node (SGSN), the one tunnel connection (OTA) is switched to a two tunnel connection (TTA).

8. Method according to claim 6 or 7, **characterized in that**
the lawful interception is carried out by the Serving GPRS Support Node (SGSN).

9. Method according to any of the preceding claims, **characterized in that**
if after establishment of a one tunnel connection (OTA) the radio network controller (RNC) triggers a "Iu_release/Rab_release" message,
the one tunnel connection (OTA) is switched to a two tunnel connection (TTA).

10. Method according to claim 9, **characterized in that** after a radio bearer is established the SGSN decides whether the two tunnel connection (TTA) is to be switched back to a one tunnel connection (OTA).

11. Method according to any of the preceding claims, **characterized in that**
if after establishment of a one tunnel connection (OTA) a subscriber using the connection establishes a new radio connection
the Serving GPRS Support Node (SGSN) decides whether
the one tunnel connection (OTA) is switched to a two tunnel connection (TTA).

12. Method according to claim 11, **characterized in that** the subscriber using the connection establishes a new radio connection via a "Service Request (Type = Data)" message.

13. Method according to any of the preceding claims, **characterized in that**
the one or two tunnel(s) respectively is a GTP-U tunnel.

14. Method according to any of the preceding claims, **characterized in that**
the named telecommunication network element (Serving GPRS Support Node SGSN) that decides is a Serving GPRS Support Node (SGSN).

15. Serving GPRS Support Node (SGSN) for a cellular mobile telecommunication network,
with a logic (OTA_TTA logic) which is able to decide on whether for a connection one tunnel will be established between a Gateway GPRS support node (GGSN) and a Radio Network Controller (RNC) or
whether for the connection two tunnels will be established between the Gateway GPRS support node (GGSN) and the Radio Network Controller (RNC).
